# EUROPÄISCHE PATENTANMELDUNG

(11) **EP 1 524 283 A2**
(43) Veröffentlichungstag der Anmeldung: **20.04.2005**
(21) Anmeldenummer: 04103984.3
(22) Anmeldetag: 19.08.2004
(51) Int. Cl.: C08G 18/22, C08G 18/28, C08G 18/32, C09D 175/06

(54) **Polyurethan-Pulverlackbeschichtungen, welche feste uretdiongruppenhaltige Polyadditionsverbindungen enthalten, und ein Verfahren zu ihrer Herstellung**

(30) Priorität: 15.10.2003 DE 10347901
(71) Anmelder: Degussa AG, 40474 Düsseldorf (DE)
(72) Erfinder: Wenning, Andreas, Dr., 48301 Nottuln (DE); Spyrou, Emmanouil, Dr., 46282 Dorsten (DE)

(57) **Zusammenfassung**

Die Erfindung betrifft Polyurethan-Pulverlackbeschichtungen, welche feste uretdiongruppenhaltige Polyadditionsverbindungen enthalten, und ein Verfahren zu ihrer Herstellung. Die Polyurethan-Pulverlackbeschichtungen vernetzen bei niedrigen Einbrenntemperaturen zu hochglänzenden oder matten, licht- und wetterstabilen Lackfilmen.

## Beschreibung

Die Erfindung betrifft Polyurethan-Pulverlackbeschichtungen, welche feste uretdiongruppenhaltige Polyadditionsverbindungen enthalten, und ein Verfahren zu ihrer Herstellung. Die Polyurethan-Pulverlackbeschichtungen vernetzen bei niedrigen Einbrenntemperaturen zu hochglänzenden oder matten, licht- und wetterstabilen Lackfilmen.

Bei Raumtemperatur feste, extern oder intern blockierte Polyisocyanate stellen wertvolle Vernetzer für thermisch vernetzbare Polyurethan (PUR)-Pulverlackzusammensetzungen dar.

So beschreibt z. B. die DE 27 35 497 PUR-Pulverlacke mit hervorragender Witterungs- und Wärmestabilität. Die Vernetzer, deren Herstellung in der DE 27 12 931 beschrieben wird, bestehen aus ε-Caprolactam blockierten Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE 30 30 539 und DE30 30 572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Pulverlackbeschichtungen und damit zu mäßigen Lösemittelbeständigkeiten führen.

Uretdion-Pulverlackvernetzer, die durch Umsetzung von uretdiongruppenhaltigen Polyisocyanaten mit Diolen und Ester- und/oder carbonatgruppenhaltigen Kettenverlängerungsmitteln bzw. unter Verwendung von Dimerdiolen hergestellt werden, sind in der EP 0 639 598 und in der EP 0 720 994 beschrieben.

Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf.

Den Pulverlackzusammensetzungen auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Pulverlackzusammensetzung wird in der EP 0 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 0 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metallacetylacetonaten, z. B. Zinkacetylacetonat, beansprucht. Solche Katalysatoren sind tatsächlich in der Lage, die Aushärtungstemperatur von uretdiongruppenhaltigen Polyurethan-Pulverlackzusammensetzungen zu erniedrigen, zeigen als Reaktionsprodukte aber hauptsächlich Allophanate (M. Gedan-Smolka, F. Lehmann, D. Lehmann "New catalysts for the low temperature curing of uretdione powder coatings" *International Waterborne, High solids and Powder Coatings Symposium, New Orleans*, 21. - 23.02.2001). Allophanate sind die Umsetzungsprodukte aus einem Mol Alkohol und zwei Mol Isocyanat, während sich in der herkömmlichen Urethanchemie ein Mol Alkohol mit einem Mol Isocyanat umsetzt. Durch die unerwünschte Allophanatbildung werden also technisch wie ökonomisch wertvolle Isocyanatgruppen vernichtet.

In den DE 103 20 267, DE 102 05 608 und DE 103 20 266 werden Metallhydroxide, Metallalkoholate, quartäre Ammoniumsalze mit Hydroxiden, Fluoriden oder Carboxylaten beschrieben, die die Rückspaltung von Uretdiongruppen so stark beschleunigen, so dass sich bei Verwendung uretdiongruppenhaltiger Pulverlackhärter die Aushärtetemperatur von Pulverlackzusammensetzungen beträchtlich erniedrigen lässt.

Alle aus derartigen hoch beschleunigten Pulverlackzusammensetzungen hergestellten Beschichtungen besitzen das Problem, dass ihre Oberflächen starke Orangenschaleneffekte oder gar Strukturen aufweisen.

Aufgabe der vorliegenden Erfindung war es daher, neue hochreaktive Polyurethan-Pulverlackzusammensetzungen zu finden, die bei sehr niedrigen Temperaturen aushärten und hochglänzende oder matte, licht- und wetterstabile Pulverbeschichtungen mit einem guten Verlauf bilden.

Überraschend wurde gefunden, dass uretdiongruppenhaltige Polyadditionsverbindungen, bei deren Herstellung Dodecandiol-1,12 als Diolkomponente mitverwendet wurde, als Vernetzerkomponente für bei sehr niedrigen Einbrenntemperaturen ausgehärtete Polyurethan-Pulverlacke, deren Filme gut verlaufen, einsetzbar sind.

Gegenstand der Erfindung sind hochreaktive Polyurethan-Pulverlackzusammensetzung, im Wesentlichen enthaltend
I. mindestens eine feste, uretdiongruppenhaltige Polyadditionsverbindung, erhalten durch Umsetzung von
   A) 40 bis 90 Massen% mindestens einer aliphatischen, (cyclo)aliphatischen oder cycloaliphatischen Polyisocyanatkomponente, aufgebaut aus
      1. mindestens 40 Massen-% einer Uretdiongruppen aufweisenden Polyisocyanatverbindung mit einer mittleren Funktionalität von mindestens 2,0
         und
      2. höchstens 60 Massen% mindestens einer Diisocyanatverbindung und/oder Isocyanuratverbindung ohne Uretdiongruppen;
   B) 60 bis 10 Massen-% Dodecandiol-1,12,
   C) 50 bis 0 Massen-% mindestens einer weiteren Verbindung mit mindestens einer Hydroxylgruppe,
   wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen;
II. mindestens ein hydroxylgruppenhaltiges Polymer mit einem Schmelzpunkt von 40 bis 130 °C und einer OH-Zahl zwischen 20 und 200 mg KOH/g;
III. mindestens einen Katalysator aus der Gruppe der Metallacetylacetonate, Metallhydroxide, Metallalkoholate und/oder quartäre Ammoniumsalze mit Hydroxiden, Fluoriden oder Carboxylaten;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt.

Weiterer Gegenstand der Erfindung ist ein Verfahren zur Herstellung von hochreaktiven Polyurethan-Pulverlackzusammensetzungen, im Wesentlichen enthaltend
I. mindestens einen festen, uretdiongruppenhaltige Polyadditionsverbindung, erhalten durch Umsetzung von
   A) 40 bis 90 Massen-% mindestens einer aliphatischen, (cyclo)aliphatischen oder cycloaliphatischen Polyisocyanatkomponente, die aufgebaut ist aus
      1. mindestens 40 Massen-% einer Uretdiongruppen aufweisenden Polyisocyanatverbindung mit einer mittleren Funktionalität von mindestens 2,0
         und
      2. höchstens 60 Massen% mindestens einer Diisocyanatverbindung und/oder Isocyanuratverbindung ohne Uretdiongruppen;
   B) 60 bis 10 Massen-% Dodecandiol-1,12,
   C) 50 bis 0 Massen% mindestens einer weiteren Verbindung mit mindestens einer Hydroxylgruppe,
   wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen;
II. mindestens ein hydroxylgruppenhaltiges Polymer mit einem Schmelzpunkt von 40 bis 130 °C und einer OH-Zahl zwischen 20 und 200 mg KOH/g;
III. mindestens einen Katalysator aus der Gruppe der Metallacetylacetonate, Metallhydroxide, Metallalkoholate und/oder quartäre Ammoniumsalze mit Hydroxiden, Fluoriden oder Carboxylaten;
IV. gegebenenfalls mindestens eine gegenüber Säuregruppen reaktive Verbindung mit einem Gewichtsanteil, bezogen auf die Gesamtformulierung, von 0,1 bis 10 %;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt, in beheizbaren Aggregaten bei einer Temperaturobergrenze von 120 bis 130 °C.

Die erfindungsgemäßen hochreaktiven Polyurethan-Pulverlackzusammensetzungen enthalten im Wesentlichen die uretdiongruppenhaltigen Polyadditionsverbindungen I. in Kombination mit mindestens einem hydroxylgruppenhaltigen Polymer II., mindestens einem Katalysator III., gegebenenfalls mindestens eine gegenüber Säuregruppen reaktiven Verbindung und gegebenenfalls Hilfs- und Zusatzstoffe.
Die erfindungsgemäß eingesetzten Uretdiongruppen aufweisenden Polyisocyanate A1) werden aus beliebigen Diisocyanaten durch katalytische Dimerisierung der Isocyanatgruppen erhalten. Bei den beliebigen Diisocyanaten zur Herstellung der Ausgangsverbindungen A1) handelt es sich um aliphatische, cycloaliphatische, araliphatische und/oder aromatische Diisocyanate. Bevorzugte Beispiele sind 1,6-Diisocyanatohexan (HDI), 2-Methylpentamethylendiisocyanat-1,5 (DI 51), 2,2,4 (2,4,4)-Trimethylhexamethylendiisocyanat, 4,4'-Diisocyanatodicyclohexylmethan, 1,3- und 1,4-Diisocyanatocyclohexan, Isophorondiisocyanat (IPDI), Diphenylmethan-2,4' und/oder -4,4'-diisocyanat, Xylylendiisocyanat oder 2,4- und 2,6-Toluylendiisocyanat sowie beliebige Gemische dieser Isomeren, wobei diese Diisocyanate allein oder in Mischungen zur Herstellung der Komponente A) eingesetzt werden können. Auch die Uretdiongruppen aufweisenden Polyisocyanate sind beliebig untereinander mischbar.

Als Katalysatoren zur Herstellung der Ausgangsverbindungen A1) aus den genannten Diisocyanaten sind grundsätzlich alle bekannten, die Dimerisierung von Isocyanatgruppen katalysierenden Verbindungen geeignet. Beispiele sind tertiäre organische Phosphine (US 4 614 785, DE 19 34 763, DE 39 00 053), Tris-(dialkylamino)-phosphine (DE 30 30 513, DE 32 27 779, DE 34 37 635), substituierte Pyridine (DE 10 81 895, DE 37 39 549) und substituierte Imidazole oder Benzimidazole (EP 0 417 603).

Bevorzugte Ausgangsverbindungen A1) für das erfindungsgemäße Verfahren sind Uretdiongruppen aufweisende Polyisocyanate, die aus Diisocyanaten mit aliphatisch und/oder cycloaliphatisch gebundenen Isocyanatgruppen hergestellt sind. Besonders bevorzugt werden die Uretdione des Isophorondiisocyanats (IPDI) und des 1,6-Diisocyanatohexan (HDI) verwendet.

Das isocyanuratfreie Uretdion des Isophorondiisocyanats ist bei Raumtemperatur hochviskos und größer als 10⁶ mPa s, bei 60 °C liegt die Viskosität bei 13·10³ mPa s und bei 80 °C bei 1,4·10³ mPa s. Der freie NCO-Gehalt liegt zwischen 16,8 und 18,5 Massen-%, d. h. dass mehr oder minder hohe Anteile an Polyuretdion des IPDI im Reaktionsprodukt vorliegen müssen. Der Monomergehalt liegt bei 1 Massen-%. Der Gesamt-NCO-Gehalt des Reaktionsprodukts nach dem Erhitzen auf 180 bis 200 °C beträgt 37,5 bis 37,8 Gew.-%.

Während der Dimerisierung von aliphatischen Diisocyanaten bei an sich bekannten Verfahren und Katalysatoren bildet sich als Nebenprodukt Isocyanurat in unterschiedlichen Mengen, so dass die NCO-Funktionalität der eingesetzten isocyanurathaltigen Polyisocyanat-Uretdione mindestens 2 beträgt.

Bei den Diisocyanaten A2) handelt es sich um die oben angegebenen, zur Herstellung der Komponente A1) geeigneten Diisocyanate. Sie können bis zu 60 Gew.-%, bezogen auf das Gesamtgewicht der Ausgangsverbindungen A1) und A2), ausmachen. Geeignete Gemische sind z. B. auch Lösungen von Uretdionen in Diisocyanaten, wie sie nach katalytischer Dimerisierung und ohne Abtrennung des nicht umgesetzten Diisocyanats erhalten werden.

Bei den Isocyanuraten A2) handelt es sich bevorzugt um die Trimeren der Diisocyanate, die auch zur Herstellung der Uretdiongruppen aufweisenden Polyisocyanatverbindungen A1) verwendet werden. Die Isocyanurate können separat der Polyisocyanatverbindung A1) zugegeben werden, oder sie sind bereits Bestandteil der Polyisocyanatverbindung A1), da sie teilweise bei der Dimerisierung von Diisocyanaten als Nebenprodukt gebildet werden.

Bevorzugt sind in Komponente A2) IPDI und/oder HDI sowie die entsprechenden Isocyanurate enthalten.

Als Verbindungen C) eignen sich alle in der PUR-Chemie üblicherweise eingesetzten Mono- Di- oder Polyole des Molekulargewichtes von mindestens 32.

Beispielsweise handelt es sich bei den Monoalkoholen um Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol sowie Hydroxymethylcyclohexan.
Bei den Diolen handelt es sich beispielweise um Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester.

Bei den Triolen handelt es sich beispielweise um Trimethylolpropan, Ditrimethylolpropan, Trimethylolethan, Hexantriol-1,2,6, Butantriol-1,2,4, Tris(β-Hydroxyethyl)-isocyanurat, Pentaerythrit, Mannit oder Sorbit.

Es eignen sich auch Di- oder Polyole, die weitere funktionelle Gruppen enthalten. Hierbei handelt es sich um die an sich bekannten hydroxylgruppenhaltigen Polyester, Polycarbonate, Polycaprolactone, Polyether, Polythioether, Polyesteramide, Polyurethane oder Polyacetale. Sie besitzen ein zahlenmittleres Molekulargewicht von 134 bis 3 500.

Die Mono-, Di- oder Polyole werden allein oder in Mischungen verwendet.

Die uretdiongruppenhaltigen Polyadditionsprodukte I. werden gemäß dem wie folgt beschriebenen Verfahren erhalten.

Die Umsetzung in Lösemittel erfolgt im Allgemeinen bei Temperaturen von 50 bis 100 °C, vorzugsweise zwischen 60 und 90 °C. Die Hydroxylgruppen tragenden Komponenten B) und gegebenenfalls C) werden vorgelegt und die uretdiongruppenhaltige Polyadditionsverbindung A) so rasch wie möglich zugesetzt, ohne dass die Reaktionstemperatur die oben genannten Grenzen überschreitet. Die Ausgangsverbindungen B) und C) können wahlweise zusammen vorgelegt oder in beliebiger Reihenfolge einzeln oder in Mischung nacheinander mit der uretdiongruppenhaltigen Polyadditionsverbindung A) umgesetzt werden. Nach erfolgter Umsetzung wird das Lösemittel entfernt. Dazu geeignet sind Abdampfschnecken, Filmextruder oder auch Sprühtrockner.

Geeignete Lösemittel sind Benzol, Toluol oder andere aromatische bzw. aliphatische Kohlenwasserstoffe, Essigester wie Ethyl- oder Butylacetat, auch Ketone wie Aceton, Methylethylketon, Methylisobutylketon oder chlorierte aromatische und aliphatische Kohlenwasserstoffe sowie beliebige Gemische dieser oder anderer inerter Lösemittel.

Außerdem ist die lösemittelfreie und kontinuierliche Herstellung der erfindungsgemäßen uretdiongruppenhaltigen Polyadditionsprodukte I. mittels Intensivkneter in einem Ein- oder Mehrschneckenextruder, insbesondere in einem Zweiwellenextruder, Planetwalzenextruder oder Ringextruder möglich. Die Lösemittel freie Synthese erfordert Temperaturen von 110 bis 190 °C, die bereits deutlich im Respaltbereich für Uretdiongruppen liegen. Als vorteilhaft erwiesen sich dabei die kurzen Reaktionszeiten von < 5 Minuten, vorzugsweise < 3 Minuten, insbesondere < 2 Minuten. Die kurzzeitige thermische Belastung reicht aus, um die Reaktionspartner homogen zu mischen und dabei vollständig oder weitgehend umzusetzen. Anschließend wird entsprechend der Gleichgewichtseinstellung gezielt abgekühlt und, falls erforderlich, der Umsatz vervollständigt.

Die Umsetzungsprodukte werden dem Reaktionskneter in getrennten Produktströmen zugeführt, wobei die Ausgangskomponenten bis auf 120 °C, vorzugsweise bis 90 °C, vorgewärmt werden können. Handelt es sich um mehr als zwei Produktströme, können diese auch gebündelt zudosiert werden. Ausgangsverbindungen B) und/oder C) und/oder Katalysatoren und/oder weitere übliche Lack-Zuschlagsstoffe wie Verlaufmittel und/oder Stabilisatoren können zu einem Produktstrom zusammengefasst werden.

Ebenfalls kann die Reihenfolge der Produktströme variabel gehandhabt werden sowie die Eintrittsstelle für die Produktströme unterschiedlich sein.

Zur Nachreaktion, Abkühlung, Zerkleinerung und Absackung werden bekannte Verfahren und Technologien verwendet.

Zur Beschleunigung der Polyadditionsreaktion können auch die in der PUR-Chemie üblichen Katalysatoren verwendet werden. Sie werden in einer Konzentration von 0,01 bis 2 Gew.-%, vorzugsweise von 0,03 bis 0,5 Gew.-%, bezogen auf die eingesetzten Reaktionskomponenten, eingesetzt. Katalysatoren sind beispielsweise tert. Amine, wie Triethylamin, Pyridin oder N,N-Dimethylaminocyclohexan, oder Metallsalze, wie Eisen(III)-chlorid, Molybdänglykolat und Zinkchlorid. Als besonders geeignet erwiesen sich Zinn-II- und -IV-Verbindungen. Genannt seien hier besonders Dibutylzinndilaurat (DBTL) und Zinnoctoat.

Bei den hydroxylgruppenhaltigen Polymeren II. werden bevorzugt Polyester, Polyether, Polyacrylate, Polyurethane und/oder Polycarbonate mit einer OH-Zahl von 20 bis 200 (in mg KOH/g) eingesetzt. Besonders bevorzugt werden Polyester mit einer OH-Zahl von 30 bis 150, einem mittleren Molekulargewicht von 500 bis 6 000 g/mol und einem Schmelzpunkt zwischen 40 und 130 °C verwendet. Solche Bindemittel sind beispielsweise in EP 0 669 354 und EP0 254 152 beschrieben worden. Selbstverständlich können auch Mischungen solcher Polymere eingesetzt werden. Die Menge an den hydroxylgruppenhaltigen Polymeren wird so gewählt, dass auf jede Hydroxylgruppe des Polymeren 0,3 bis 1 Uretdiongruppe der erfindungsgemäßen uretdiongruppenhaltigen Polyadditionsverbindung entfällt.

Einsetzbare Katalysatoren III. zur Beschleunigung der Vernetzungsreaktion der uretdiongruppenhaltigen Polyadditionsverbindung mit dem hydroxylgruppenhaltigen Polymeren sind Metallacetylacetonate, Metallhydroxide, Metallalkoholate oder quartäre Ammoniumsalze mit Hydroxiden, Fluoriden oder Carboxylaten. Sie werden z. B. in der WO 00/34355, DE 103 20 267, DE 102 05 608 und DE 103 20 266 beschrieben.

Der Anteil des Katalysators an der Gesamtmenge der erfindungsgemäßen uretdiongruppenhaltigen Polyadditionsverbindung und dem hydroxylgruppenhaltigen Polymeren beträgt 0,001 bis 3 Massen-%.

Die Aktivität dieser Katalysatoren nimmt in Anwesenheit von Säuren deutlich ab. Zu den herkömmlichen Reaktionspartnern uretdiongruppenhaltiger Polyadditionsverbindungen gehören hydroxylgruppenhaltige Polyester. Aufgrund der Herstellungsweise dieser Polyester tragen sie mitunter in geringem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern bietet es sich an, die erwähnten Katalysatoren entweder im Überschuss, bezogen auf die Säuregruppen, zu verwenden, oder aber reaktive Verbindungen zuzusetzen, die in der Lage sind, Säuregruppen abzufangen. Sowohl monofunktionelle als auch mehrfachfunktionelle Verbindungen können hierzu eingesetzt werden. Die möglicherweise vernetzende Wirkung der mehrfach funktionellen Verbindungen ist aufgrund der viskositätserhöhenden Wirkung zwar unerwünscht, stört aber in der Regel wegen der geringen Konzentration nicht.

Reaktive Säure abfangende Verbindungen IV. sind in der Lackchemie allgemein bekannt. So setzen sich beispielsweise Epoxyverbindungen, Carbodiimide, Hydroxyalkylamide oder aber auch 2-Oxazoline mit Säuregruppen bei erhöhten Temperaturen um. In Frage kommen dabei z. B. Triglycidyletherisocyanurat (TGIC), EPIKOTE® 828 (Diglycidylether auf Basis Bisphenol A, Schell), Versaticsäureglycidylester, Ethylhexylglycidylether, Butylglycidylether, Polypox R 16 (Pentaerythrittetraglycidylether, UPPC AG), Vestagon EP HA 320, (Hydroxyalkylamid, Degussa AG), aber auch Phenylenbisoxazolin, 2-Methyl-2-oxazolin, 2-Hydroxyethyl-2-oxazolin, 2-Hydroxypropyl-2-oxazolin und 5-Hydroxypentyl-2-oxazolin. Selbstverständlich kommen auch Mischungen solcher Substanzen in Frage. Diese reaktive Verbindungen können in Gewichtsanteilen von 0,1 bis 10 %, bevorzugt von 0,5 bis 3 %, bezogen auf die Gesamtformulierung, eingesetzt werden.

Für die Pulverlackherstellung können die in der Pulverlacktechnologie üblichen Hilfs- und Zusatzstoffe, wie Verlaufmittel, z. B. Polysilicone oder Acrylate, Lichtschutzmittel, z. B. sterisch gehinderte Amine, oder andere Hilfsmittel, wie sie z. B. in EP0 669 353 beschrieben wurden, in einer Gesamtmenge von 0,05 bis 5 Gew.-% zugesetzt werden. Füllstoffe und Pigmente, wie z. B. Titandioxid, können in einer Menge bis zu 50 Gew.-% der Gesamtzusammensetzung zugesetzt werden.

Optional können zusätzliche Katalysatoren, wie sie in der Polyurethanchemie bereits bekannt sind, enthalten sein. Es handelt sich hierbei hauptsächlich um metallorganische Katalysatoren, wie z. B. Dibutylzinndlaurat, oder aber tertiäre Amine, wie z. B. 1,4-Diazabicylco[2,2,2,]octan, in Mengen von 0,001 bis 1 Gew.-%.
Die Homogenisierung aller Bestandteile zur Herstellung einer Pulverlackzusammensetzung kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, oder elektrostatisches Wirbelsintern erfolgen. Nach dem Pulverauftrag werden die beschichteten Werkstücke zur Aushärtung 4 bis 60 Minuten auf eine Temperatur von 120 bis 220 °C, vorzugsweise 6 bis 30 Minuten bei 120 bis 180 °C, erhitzt.

Die Niedrigtemperatur härtenden Pulverlackzusammensetzungen werden in der Regel bei Temperaturen von 120 bis 160 °C ausgehärtet. Durch ihre Verwendung können nicht nur Energie und (Aushärtungs-)Zeit gespart werden, sondern es lassen sich auch viele temperatursensible Substrate beschichten, die bei Temperaturen von 180 °C oder höher unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur.

Niedrigtemperatur härtenden Pulverlackzusammensetzungen des Stands der Technik haben jedoch das Problem, dass die Lacke schon ausgehärtet sind, bevor der Film gut verlaufen konnte. Große Verlaufprobleme wie starke Orangenschaleneffekte oder gar strukturierte Oberflächen mindern die Qualität der Beschichtungen maßgeblich. Die erfindungsgemäßen uretdiongruppenhaltigen Polyadditionsverbindungen können in hochreaktiven Polyurethan-Pulverlackzusammensetzungen eingesetzt werden, wobei die bei sehr niedrigen Temperaturen ausgehärteten, hochglänzenden oder matten, licht- und wetterstabilen Pulverbeschichtungen einen guten Verlauf zeigen.

Gegenstand der Erfindung ist auch die Verwendung der erfindungsgemäßen Pulverlackzusammensetzungen zur Herstellung von Pulverlackbeschichtungen, insbesondere auf Metall-, Kunststoff-, Glas-, Holz-, oder Ledersubstraten oder sonstigen Hitze resistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, Glasbeschichtungszusammensetzungen, Lederbeschichtungszusammensetzungen und Kunststoffbeschichtungszusammensetzungen, im Wesentlichen enthaltend die erfindungsgemäße Polyurethan-Pulverlackzusammensetzung aus den uretdiongruppenhaltigen Polyadditionsverbindungen I. in Kombination mit mindestens einem hydroxylgruppenhaltigen Polymer II., mindestens einem Katalysator III., gegebenenfalls mindestens eine gegenüber Säuregruppen reaktiven Verbindung IV. und gegebenenfalls Hilfs- und Zusatzstoffe.

Nachfolgend wird der Gegenstand der Erfindung anhand von Beispielen näher erläutert.

### Beispiele:

### A) Herstellung der uretdiongruppenhaltigen Polyadditionsverbindung

### 1. Aus Lösemittel

In einem Reaktor werden 230 g Dodecandiol-1,12 und 0,5 g Dibutylzinndilaurat in 1 l Aceton gelöst. Die Lösung wird auf 50 °C aufgeheizt. Unter starkem Rühren und Inertgasatmosphäre werden 470 g IPDI-Uretdion hinzugegeben. Die Umsetzung wird mittels titrimetrischer NCO-Bestimmung kontrolliert und ist nach 2 Stunden beendet. Danach wird das Lösemittel entfernt, das Produkt abgekühlt und zerkleinert. Das Produkt besitzt einen Schmelzbereich von 89 bis 92 °C und einen NCO-Gehalt von 11,4%.

### 2. Lösemittelfrei

In die Einzugsgehäuse eines Doppelschneckenextruders werden 470 g IPDI-Uretdion mit einer Temperatur von 60 bis 110 °C eingespeist, wobei gleichzeitig eine Mischung aus 230 g Dodecandiol-1,12 und 0,5 g Dibutylzinndilaurat mit einer Temperatur von 25 bis 110 °C zudosiert wird.

Der eingesetzte Extruder setzt sich aus zehn Gehäusen zusammen, davon fünf Heizzonen. Die Soll-Temperaturen der fünf Heizzonen liegen zwischen 50 und 180 °C und können einzeln gesteuert werden. Die Regelung in den Gehäusen erfolgt durch elektrische Heizung und pneumatische Kühlung. Das Düsenelement wird mittels Ölthermostat beheizt. Die Drehzahl der Doppelschnecke, aufgebaut mit Förderelementen, liegt zwischen 50 und 380 Upm.

Das Reaktionsprodukt, das in einer Menge von 10 bis 130 kg/h anfällt, wird abgekühlt, zerkleinert und abgesackt. Es besitzt einen Schmelzbereich von 89 bis 92 °C und einen NCO-Gehalt von 11,4 %.

### B) Polyurethan-Pulverlacke

### Allgemeine Herstellungsvorschrift

Die gemahlenen Produkte - erfindungsgemäße uretdiongruppenhaltige Polyadditionsverbindung, Polyester, Säurefänger, Katalysator, Verlaufmittel, Weißpigment - werden in einem Kollergang innig vermischt und anschließend im Extruder bei 80 bis 140 °C homogerisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei 150 °C 30 Minuten eingebrannt.

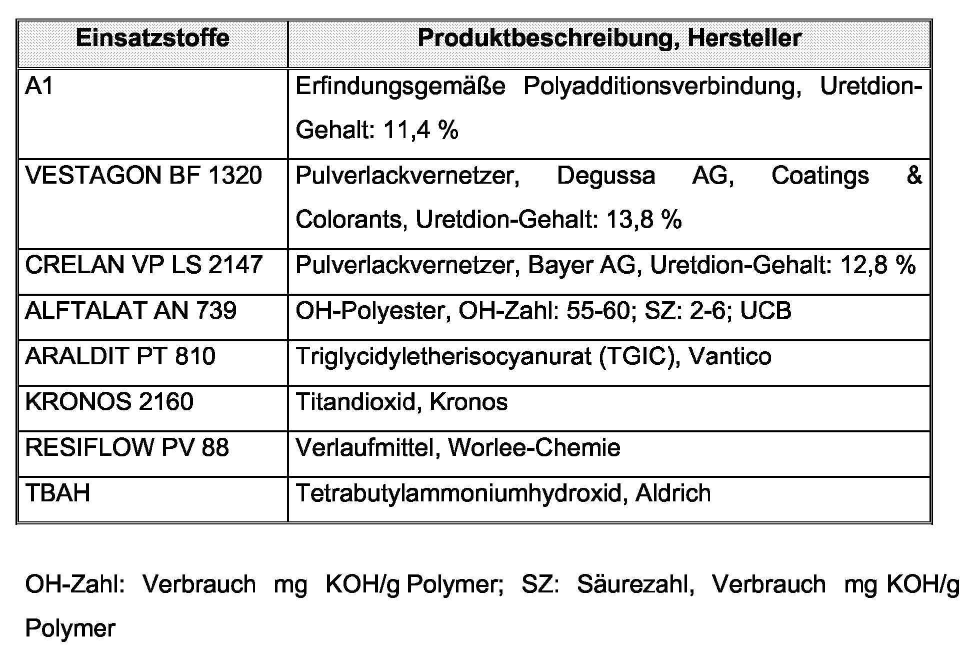

Pulverlackzusammensetzungen (Angaben in Massen-%):

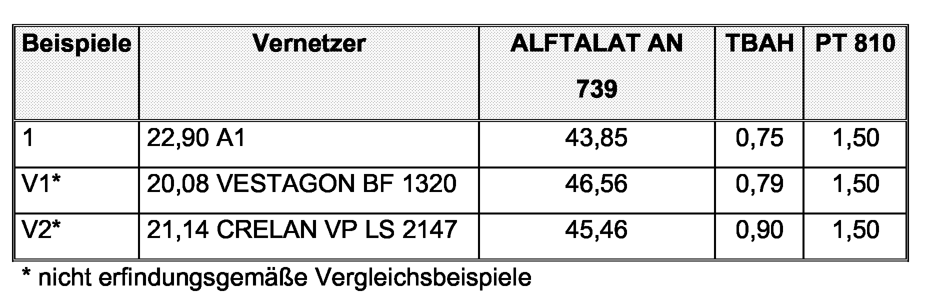

Zusätzlich werden in jeder der Formulierungen 30,0 Gew.-% KRONOS 2160, 1,0 Gew.-% RESIFLOW PV 88 und 1,5 Gew.-% ARALDIT PT 810 eingesetzt.

Ergebnisse der Aushärtung nach 30 Minuten bei 150 °C:

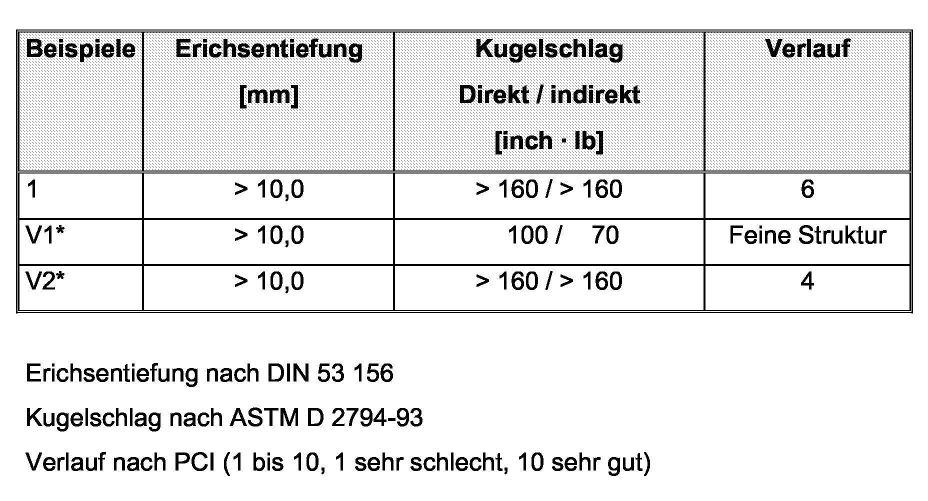

## Patentansprüche

1. Hochreaktive Polyurethan-Pulverlackzusammensetzung, im Wesentlichen enthaltend
I. mindestens eine feste, uretdiongruppenhaltige Polyadditionsverbindung, erhalten durch Umsetzung von
A) 40 bis 90 Massen% mindestens einer aliphatischen, (cydo)aliphatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen% mindestens einer Diisocyanatverbindung und/oder Isocyanuratverbindung ohne Uretdiongruppen;
B) 60 bis 10 Massen-% Dodecandiol-1,12,
C) 50 bis 0 Massen% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen;
II. mindestens ein hydroxylgruppenhaltiges Polymer mit einem Schmelzpunkt von 40 bis 130 °C und einer OH-Zahl zwischen 20 und 200 mg KOH/g;
III. mindestens einen Katalysator aus der Gruppe der Metallacetylacetonate, Metallhydroxide, Metallalkoholate und/oder quartäre Ammoniumsalze mit Hydroxiden, Fluoriden oder Carboxylaten;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt.

2. Polyurethan-Pulverlackzusammensetzung nach Anspruch 1,
**dadurch gekennzeichnet,**
**dass** feste, uretdiongruppenhaltigen Polyadditionsverbindungen I. auf Basis von 1,6-Diisocyanatohexan (HDI), 2-Methylpentamethylendiisocyanat-1 ,5, 2,2,4 (2,4,4)-Trimethylhexamethylendiisocyanat, 4,4'-Diisocyanatodicyclohexylmethan, 1,3- und 1,4-Diisocyanatocyclohexan, Isophorondiisocyanat (IPDI), Diphenylmethan-2,4' und/oder -4,4'-diisocyanat, Xylylendiisocyanat, 2,4- oder 2,6- Toluylendiisocyanat, allein oder in Mischungen, enthalten sind.

3. Polyurethan-Pulverlackzusammensetzung nach mindestens einem der vorherigen Ansprüche,
**dadurch gekennzeichnet,**
**dass** in der festen, uretdiongruppenhaltigen Polyadditionsverbindung I. als Verbindung C) Mono-, Di- oder Polyole des Molekulargewichtes von mindestens 32 enthalten sind.

4. Polyurethan-Pulverlackzusammensetzung nach mindestens einem der vorherigen Ansprüche,
**dadurch gekennzeichnet,**
**dass** als Verbindung C) Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol, Hydroxymethylcyclohexan, Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol, Hydroxypivalinsäureneopentylglykolester, Trimethylolpropan, Ditrimethylolpropan, Trimethylolethan, Haexantiol-1,2,6, Butantriol-1,2,4, Tris(β-Hydroxyethyl)-isocyanurat, Pentaerythrit, Mannit, Sorbit, hydroxylgruppenhaltigen Polyester, Polycarbonate, Polycaprolactone, Polyether, Polythioether, Polyesteramide, Polyurethane oder Polyacetale, allein oder in Mischungen, enthalten sind.

5. Polyurethan-Pulverlackzusammensetzung nach mindestens einem der vorherigen Ansprüche,
**dadurch gekennzeichnet,**
**dass** als hydroxylgruppenhaltige Polymere II. Polyester, Polyether, Polyacrylate, Polyurethane oder Polycarbonate, allein oder in Mischungen, enthalten sind.

6. Polyurethan-Pulverlackzusammensetzung nach mindestens einem der vorherigen Ansprüche,
**dadurch gekennzeichnet,**
**dass** mindestens eine gegenüber Säuregruppen reaktive Verbindung IV. mit einem Gewichtsanteil, bezogen auf die Gesamtformulierung, von 0,1 bis 10 % enthalten ist.

7. Polyurethan-Pulverlackzusammensetzung nach Anspruch 6,
**dadurch gekennzeichnet,**
**dass** als gegenüber Säuregruppen reaktive Verbindung Epoxyverbindungen, Carbodiimide, Hydroxyalkylamide und/oder 2-Oxazoline, eingesetzt werden.

8. Polyurethan-Pulverlackzusammensetzung nach Anspruch 7,
**dadurch gekennzeichnet,**
**dass** als gegenüber Säuregruppen reaktive Verbindung Versaticsäureglycidylester, Triglycidyletherisocyanurat, EPIKOTE® 828, Vestagon EP HA 320, Phenylenbisoxazolin, 2-Methyl-2-oxazolin-2-Hydroxyethyl-2-oxazolin, 2-Hydroxypropyl-2-oxazolin und/oder 5-Hydroxypentyl-2-oxazolin, allein oder in Mischungen, eingesetzt werden.

9. Polyurethan-Pulverlackzusammensetzung nach mindestens einem der vorherigen Ansprüche,
**dadurch gekennzeichnet,**
**dass** Hilfs- und Zusatzstoffe enthalten sind.

10. Polyurethan-Pulverlackzusammensetzung nach Anspruch 9,
**dadurch gekennzeichnet,**
**dass** Verlaufsmittel, Lichtschutzmittel, Füllstoff, zusätzliche Katalysatoren und/oder Pigmente enthalten sind.

11. Verfahren zur Herstellung von hochreaktiven Polyurethan-Pulverlackzusammensetzungen, im Wesentlichen enthaltend
I. mindestens einen festen, uretdiongruppenhaltige Polyadditionsverbindung, erhalten durch Umsetzung von
A) 40 bis 90 Massen-% mindestens einer aliphatischen, (cyclo)aliphatischen oder cycloaliphatischen Polyisocyanatkomponente, die aufgebaut ist aus
1. mindestens 40 Massen-% einer Uretdiongruppen aufweisenden Polyisocyanatverbindung mit einer mittleren Funktionalität von mindestens 2,0
und
2. höchstens 60 Massen% mindestens einer Diisocyanatverbindung und/oder Isocyanuratverbindung ohne Uretdiongruppen;
B) 60 bis 10 Massen-% Dodecandiol-1,12,
C) 50 bis 0 Massen-% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen;
II. mindestens ein hydroxylgruppenhaltiges Polymer mit einem Schmelzpunkt von 40 bis 130 °C und einer OH-Zahl zwischen 20 und 200 mg KOH/g;
III. mindestens einen Katalysator aus der Gruppe der Metallacetylacetonate, Metallhydroxide, Metallalkoholate und/oder quartäre Ammoniumsalze mit Hydroxiden, Fluoriden oder Carboxylaten;
IV. gegebenenfalls mindestens eine gegenüber Säuregruppen reaktive Verbindung mit einem Gewichtsanteil, bezogen auf die Gesamtformulierung, von 0,1 bis 10 %;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt, in beheizbaren Aggregaten bei einer Temperaturobergrenze von 120 bis 130 °C.

12. Verwendung von
I. mindestens einer festen, uretdiongruppenhaltigen Polyadditionsverbindung, erhalten durch Umsetzung von
A) 40 bis 90 Massen-% mindestens einer aliphatischen, (cyclo)aliphatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12,
C) 50 bis 0 Massen% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen;
II. mindestens einem hydroxylgruppenhaltigen Polymer mit einem Schmelzpunkt von 40 bis 130 °C und einer OH-Zahl zwischen 20 und 200 mg KOH/g;
III. mindestens einem Katalysator aus der Gruppe der Metallacetylacetonate, Metallhydroxide, Metallalkoholate oder quartäre Ammoniumsalze mit Hydroxiden, Fluoriden und/oder Carboxylaten;
IV. gegebenenfalls mindestens einer gegenüber Säuregruppen reaktiven Verbindung mit einem Gewichtsanteil, bezogen auf die Gesamtformulierung, von 0,1 bis 10 %;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt,
zur Herstellung von Pulverlackbeschichtungen.

13. Verwendung nach Anspruch 12,
**dadurch gekennzeichnet,**
**dass** Ausgangsverbindungen nach mindestens einem der Ansprüche 1 bis 10 enthalten sind.

14. Verwendung nach Anspruch 12 bis 13 zur Herstellung von Pulverlackbeschichtungen auf Metall-, Kunststoff-, Holz-, Glas-, Leder- oder sonstigen hitzeresistenten Untergründen.

15. Metallbeschichtungszusammensetzungen, im Wesentlichen enthaltend eine Polyurethan-Pulverlackzusammensetzung aus
I. mindestens einer festen, uretdiongruppenhaltigen Polyadditionsverbindung, erhalten durch Umsetzung von
A) 40 bis 90 Massen-% mindestens einer aliphatischen, (cyclo)aliphatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen;
II. mindestens einem hydroxylgruppenhaltigen Polymer mit einem Schmelzpunkt von 40 bis 130 °C und einer OH-Zahl zwischen 20 und 200 mg KOH/g;
III. mindestens einem Katalysator aus der Gruppe der Metallacetylacetonate, Metallhydroxide, Metallalkoholate oder quartäre Ammoniumsalze mit Hydroxiden, Fluoriden oder Carboxylaten;
IV. gegebenenfalls mindestens einer gegenüber Säuregruppen reaktiven Verbindung mit einem Gewichtsanteil, bezogen auf die Gesamtformulierung, von 0,1 bis 10 %;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt.

16. Holzbeschichtungszusammensetzung, im Wesentlichen enthaltend eine Polyurethan-Pulverlackzusammensetzung aus
I. mindestens einer festen, uretdiongruppenhaltigen Polyadditionsverbindung, erhalten durch Umsetzung von
A) 40 bis 90 Massen-% mindestens einer aliphatischen, (cyclo)aliphatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen-% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen.
II. mindestens einem hydroxylgruppenhaltigen Polymer mit einem Schmelzpunkt von 40 bis 130 °C und einer OH-Zahl zwischen 20 und 200 mg KOH/g;
III. mindestens einem Katalysator aus der Gruppe der Metallacetylacetonate, Metallhydroxide, Metallalkoholate oder quartäre Ammoniumsalze mit Hydroxiden, Fluoriden und/oder Carboxylaten;
IV) gegebenenfalls mindestens einer gegenüber Säuregruppen reaktiven Verbindung mit einem Gewichtsanteil, bezogen auf die Gesamtformulierung, von 0,1 bis 10 %;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt.

17. Lederbeschichtungszusammensetzungen, im Wesentlichen enthaltend eine Polyurethan-Pulverlackzusammensetzung aus
I. mindestens einer festen, uretdiongruppenhaltigen Polyadditionsverbindung, erhalten durch Umsetzung von
A) 40 bis 90 Massen-% mindestens einer aliphatischen, (cyclo)aliphatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen;
II. mindestens einem hydroxylgruppenhaltigen Polymer mit einem Schmelzpunkt von 40 bis 130 °C und einer OH-Zahl zwischen 20 und 200 mg KOH/g;
III. mindestens einem Katalysator aus der Gruppe der Metallacetylacetonate, Metallhydroxide, Metallalkoholate oder quartäre Ammoniumsalze mit Hydroxiden, Fluoriden und/oder Carboxylaten;
IV. gegebenenfalls mindestens einer gegenüber Säuregruppen reaktiven Verbindung mit einem Gewichtsanteil, bezogen auf die Gesamtformulierung, von 0,1 bis 10 %;
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt.

18. Kunststoffbeschichtungszusammensetzungen, im Wesentlichen enthaltend eine Polyurethan-Pulverlackzusammensetzung aus
I. mindestens einer festen, uretdiongruppenhaltigen Polyadditionsverbindung, erhalten durch Umsetzung von
A) 40 bis 90 Massen% mindestens einer aliphatischen, (cyclo)aliphatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen.
II. mindestens einem hydroxylgruppenhaltigen Polymer mit einem Schmelzpunkt von 40 bis 130 °C und einer OH-Zahl zwischen 20 und 200 mg KOH/g;
III. mindestens einem Katalysator aus der Gruppe der Metallacetylacetonate, Metallhydroxide, Metallalkoholate oder quartäre Ammoniumsalze mit Hydroxiden, Fluoriden und/oder Carboxylaten;
IV. gegebenenfalls mindestens einer gegenüber Säuregruppen reaktiven Verbindung mit einem Gewichtsanteil, bezogen auf die Gesamtformulierung, von 0,1 bis 10 %,
wobei die beiden Komponenten I. und II. in dem Verhältnis vorliegen, dass auf jede Hydroxylgruppe der Komponente II. 0,3 bis 1 Uretdiongruppe der Komponente I. entfällt, und der Anteil des Katalysators unter III. 0,001 bis 3 Gew.-% an der Gesamtmenge der Komponenten I. und II. beträgt.

19. Metallbeschichtung nach Anspruch 15 für Automobilkarossen, Motor- und Fahrräder, Gebäudeteile und Haushaltsgeräte.

20. Beschichtungszusammensetzungen nach einem der Ansprüche 15 bis 19,
**dadurch gekennzeichnet,**
**dass** Hilfs- und Zusatzstoffe enthalten sind.

21. Beschichtungszusammensetzungen nach einem der Ansprüche 15 bis 20,
**dadurch gekennzeichnet,**
**dass** diese Verbindungen nach mindestens einem der Ansprüche 1 bis 10 enthalten.
